# FASCICULE DE BREVET EUROPEEN

(11) **EP 3 207 235 B1**
(45) Date de publication et mention de la délivrance du brevet: **03.04.2019**
(21) Numéro de dépôt: 15793871.3
(22) Date de dépôt: 15.10.2015
(51) Int. Cl.: F02C 7/32, H02K 49/00, H02K 5/20, H02K 7/11, H02K 7/116, H02K 5/18

(54) **SUPPORT D'ÉQUIPEMENT D'UNE TURBOMACHINE COMPRENANT UN RÉDUCTEUR MAGNÉTIQUE**
MITTEL ZUR HALTERUNG EINES TRIEBWERK GERÄTS MIT EINEM MAGNETGETRIEBE
MEANS FOR SUPPORTING AUXILIARY EQUIPMENT IN TURBOMACHINES COMPRISING A MAGNETIC GEARBOX

(30) Priorité: 17.10.2014 FR 1460046
(43) Date de publication de la demande: 23.08.2017
(73) Titulaire: Safran Transmission Systems, 92700 Colombes (FR)
(72) Inventeur: GUILLEMONT, Maxence, F-92700 Colombes (FR); PRUNERA-USACH, Stéphane, F-64110 Jurancon (FR); VIEL, Julien, F-95100 Argenteuil (FR); BARBE, Antoine, F-53260 Force (FR)
(74) Mandataire: Regimbeau
(86) Numéro de dépôt international: PCT/FR2015/052772
(87) Numéro de publication internationale: WO 2016/059346

(56) Documents cités:
- EP-A1- 1 863 166
- EP-A1- 2 107 228
- EP-A2- 1 931 018
- WO-A1-2010/086422
- DE-A1-102009 031 727
- DE-A1-102012 008 209
- FR-A- 1 355 241
- FR-A1- 2 938 015
- FR-A1- 3 006 734
- US-A- 4 546 865

## Description

### DOMAINE DE L'INVENTION

La présente invention concerne le domaine des turbomachines. Elle vise en particulier le montage d'équipements auxiliaires et la transmission mécanique entre un arbre du moteur d'un turboréacteur ou d'un turbopropulseur et ces équipements à l'aide d'un boîtier d'entraînement des accessoires, ou AGB (pour Accessory Gearbox, en anglais), ou entre le moteur et l'hélice d'un turbopropulseur à l'aide d'un boîtier d'entrainement de l'hélice du type PGB (pour Propeller Gearbox, en anglais).

### ARRIERE-PLAN TECHNOLOGIQUE

Le boîtier d'entraînement des accessoires, bien connu de l'homme du métier sous sa dénomination anglaise "Accessory Gear Box" (AGB), supporte différents équipements auxiliaires, ou accessoires, montés sur le moteur et nécessaires à son fonctionnement ou à celui de l'aéronef. Ces divers accessoires peuvent notamment comprendre un générateur, un démarreur, un alternateur, des pompes hydrauliques à carburant ou à huile, et sont entraînés mécaniquement par l'arbre du moteur par l'intermédiaire d'arbres de transmission. La puissance nécessaire à l'entraînement des accessoires est généralement prélevée mécaniquement au niveau du compresseur de la turbomachine.

Habituellement, l'AGB comprend des engrenages à axes parallèles afin d'entrainer mécaniquement les accessoires. L'écartement des accessoires est donc déterminé par les entraxes des engrenages, et non par leur encombrement respectif. Pour augmenter cet écartement, il est donc nécessaire d'ajouter un ou plusieurs pignons intermédiaires, ce qui présente l'inconvénient d'augmenter à la fois l'encombrement de l'AGB et sa masse. Par ailleurs, les axes de tous les engrenages de l'AGB étant parallèles, les accessoires présentent nécessairement la même orientation par rapport à l'AGB et au moteur.

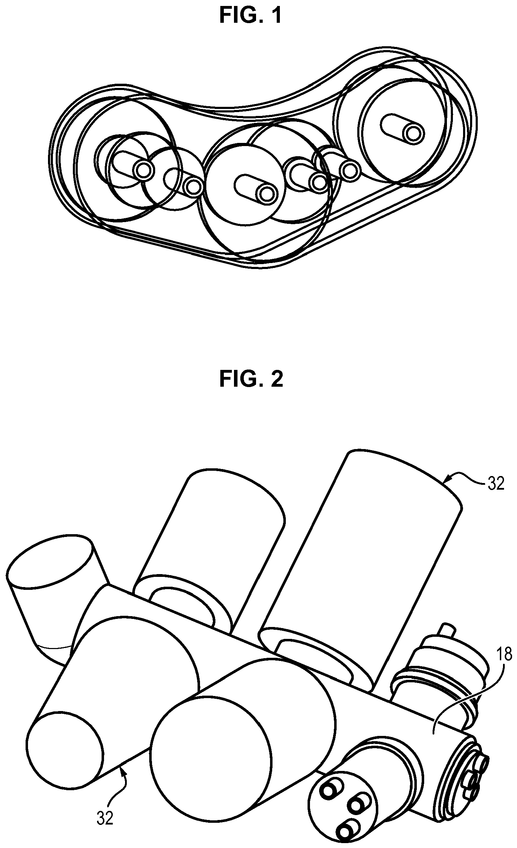

Par ailleurs, dans le cas d'un turboréacteur (ou « turbofan » en anglais), le générateur de gaz est connecté à une soufflante qui est logée dans un carter de soufflante. La nacelle présente alors une section globalement circulaire. L'espace disponible pour loger l'AGB se défini par conséquent en une partie annulaire logée dans la nacelle, autour de la turbomachine, et présente par conséquent une forme globalement courbe (voir figure 1).

Pour gagner en performances moteur, une solution consiste à réduire l'encombrement de la nacelle au niveau de la soufflante afin d'augmenter la taille de la soufflante sans augmenter pour autant le diamètre extérieur de la turbomachine. L'espace disponible dans la nacelle sous la soufflante est donc fortement réduit : il est donc nécessaire soit de réduire l'encombrement de l'AGB afin de pouvoir tout de même l'intégrer sous la soufflante dans la nacelle, soit de déplacer l'AGB en aval de la soufflante dans le compartiment central de la turbomachine (c'est-à-dire en zone « core »), dans lequel l'espace disponible est encore plus restreint.

Les AGB conventionnels des turboréacteurs ne sont donc pas adaptés d'un point de vue structurel, dimensionnel et fonctionnel, aux nouvelles configurations de soufflante et de zone core de la turbomachine.

On a donc proposé dans le document FR 3 006 734 (demande de brevet FR 1355241) au nom de la Demanderesse un AGB comprenant :
- un renvoi d'angle primaire formé d'un organe d'engrènement d'attaque entrainé par l'arbre moteur du turbopropulseur et d'un organe d'engrènement primaire,
- au moins un ensemble d'entrainement mécanique de l'arbre de transmission de l'accessoire, qui est entrainé par le moyen d'engrainement primaire par l'intermédiaire d'un renvoi d'angle secondaire comprenant deux organes d'engrènement en prise à axes non parallèles.

Un tel AGB à engrenages à axes non parallèles présente l'avantage d'être facilement modulable et de permettre en outre d'assouplir l'installation des différents accessoires en s'affranchissant de leur encombrement, sans modifier pour autant leur vitesse d'entrainement.

Toutefois, la mise à niveau de spécifications sur un AGB peut entrainer des changements d'accessoires ou de vitesses de rotation sur certaines lignes existantes, ce qui implique de redéfinir la chaine cinématique de l'AGB et les levées de risques qui en découlent.

Le document FR2938015 décrit une turbomachine comprenant un démarreur et des équipements tels par exemple qu'un générateur et une pompe à carburant, reliés au rotor de la turbomachine par des moyens de transmission de couple. Les moyens de transmission de couple comprennent un train d'engrenages et des moyens d'atténuation des pics de couple de rotation transmis au train d'engrenages au démarrage de la turbomachine et lors du fonctionnement des équipements, ces moyens d'atténuation comprenant des moyens déformables d'absorption des pics de couple et des moyens de dissipation d'énergie.

Le document US4546865 décrit un ensemble d'embrayage et de montage pour la connexion entre un accessoire de moteur d'aéronef tel qu'un alternateur, un générateur, une pompe à carburant ou similaire, et un coussin de montage de moteur, comprenant : un élément de corps ayant une paire de surfaces de montage sensiblement parallèles, l'une desdites surfaces de montage étant sensiblement identique à un patin de montage du moteur et adaptée pour être connectée à l'accessoire, l'autre desdites surfaces de montage étant sensiblement identique à une extrémité surface d'un accessoire et adaptée pour être raccordée à un patin de fixation du moteur, de sorte que l'élément de corps puisse être inséré entre un accessoire et un patin de montage; et des moyens d'embrayage dans ledit élément de corps comprenant un premier élément pouvant être mis en prise avec un patin de montage, un second élément pouvant être engagé avec un accessoire, les moyens d'embrayage pouvant fonctionner pour assurer sélectivement un engagement d'entraînement entre les premier et second organes.

Le document EP2107228 décrit un avion qui comprend plusieurs groupes motopropulseurs dont chacun est relié à deux pompes entraînées par moteur par des dispositifs d'embrayage respectifs. Les deux pompes sont entraînées durant le décollage, l'atterrissage et les autres situations à forte exigence hydraulique. A vitesse de croisière, une pompe peut être désengagée, ce qui réduit la durée de son fonctionnement et étend donc sa durée de vie et réduit la charge du groupe motopropulseur.

Le document EP 1 863 166 décrit un moteur comprenant un arbre haute pression et un arbre basse pression, ainsi qu'un système de contrôle électronique de moteur. L'arbre basse pression est couplé à l'arbre haute pression par l'intermédiaire d'un accouplement électromagnétique connecté au système de contrôle du moteur.

Le document WO2010/086422 décrit un ensemble d'un boîtier de relais d'accessoires (AGB) et d'un réservoir de liquide de lubrification d'un turboréacteur. L' AGB comporte un engrenage relié à des arbres parallèles entre eux d'entraînement mécanique des accessoires. L'ensemble comporte un boîtier avec deux compartiments et une cloison, perpendiculaire auxdits arbres, de séparation des compartiments, un compartiment formant le boîtier de relais d'accessoires et un compartiment formant le réservoir de liquide.

Le document EP1931018 décrit une transmission variable électromagnétiquement comprenant un rotor externe et un rotor interne. Le rotor interne peut tourner indépendamment dans une ouverture centrale du rotor externe. Le rotor externe peut tourner indépendamment autour du rotor interne. L'un des rotors comporte une pluralité d'aimants permanents configurés par paires et faisant face à un espace d'air disposé entre le rotor externe et le rotor interne. L'autre rotor a une pluralité de fentes espacées autour d'un noyau magnétiquement perméable ayant des enroulements incorporés. Les rotors externes et internes peuvent tourner simultanément dans une direction. En réponse à la rotation de la partie de rotor externe et de la partie de rotor interne, un trajet de flux magnétique est généré entre les paires d'aimants permanents, l'entrefer, le noyau de rotor externe et une partie de noyau de rotor, pour induire une énergie électrique dans les enroulements, qui transfère la puissance entre la partie de rotor interne et la partie de rotor externe.

Le document DE102012008209 décrit une machine électrique pour l'entrainement hybride d'un véhicule.

Le document DE102009031727 décrit un ensemble de logement pour une machine électrique refroidie par liquide, dans lequel deux parties séparées délimitent ensemble une cavité destinée à un liquide de refroidissement.

### RESUME DE L'INVENTION

Un objectif de l'invention est donc de proposer un support d'équipement, tel qu'un boîtier d'entraînement des accessoires ou un boîtier d'entrainement du type PGB pouvant être utilisé dans une turbomachine qui soit modulable et permette d'assouplir l'installation des différents accessoires en s'affranchissant de leur encombrement sans modifier pour autant leur vitesse d'entrainement, qui présente en outre un poids modéré et qui permette de répartir les accessoires sur une plus grande périphérie de la turbomachine.

Pour cela, l'invention propose un support d'équipement conforme à la revendication 1.

Certaines caractéristiques préférées mais non limitatives du support d'équipement décrit ci-dessus sont les suivantes :
- la roue d'entrée comprend un pignon spiro-conique,
- le support d'équipement comprend en outre un deuxième accessoire comprenant un arbre de sortie entrainé en rotation par la roue d'entrée suivant une vitesse égale à la vitesse d'entrée,
- le réducteur à engrenages magnétiques comprend en outre un système de refroidissement,
- le support d'équipement comprend en outre un carter de réducteur, fixe par rapport au carter du support d'équipement, et dans lequel le carter de réducteur comprend un carter de révolution interne et un carter de révolution externe coaxiaux avec l'arbre d'entrée et l'arbre de sortie, ledit carter interne s'étendant à l'intérieur du carter externe, et le système de refroidissement comprend un espace de refroidissement destiné à recevoir un fluide de refroidissement, ledit espace de refroidissement étant ménagé entre le carter interne et le carter externe,
- l'accessoire est logé dans un carter d'accessoire fixe par rapport au carter du support d'équipement, l'un parmi le carter interne et le carter externe étant fixé au carter du support d'équipement par l'intermédiaire d'une bride interne tandis que l'autre parmi le carter externe et le carter interne est fixé à un carter d'accessoire par l'intermédiaire d'une bride externe,
- le support d'équipement comprend en outre des joints d'étanchéité dynamique sensiblement annulaires positionnés entre le rotor interne et le carter de réducteur d'une part et entre le rotor externe et le carter de réducteur d'autre part,
- le support d'équipement comprend en outre un joint d'étanchéité statique de forme sensiblement annulaire de part et d'autre de l'espace de refroidissement entre le carter interne et le carter externe configuré pour garantir une étanchéité dudit espace de refroidissement,
- l'espace de refroidissement comprend au moins une gorge annulaire, sensiblement coaxiale avec le carter interne et le carter externe, et une série de rainures annulaires, formées dans le carter interne et s'étendant radialement depuis la gorge annulaire,
- le support d'équipement comprend un boîtier d'entrainement des accessoires pour un turboréacteur ou un turbopropulseur ou un boîtier d'entrainement d'un turbopropulseur.

Selon un deuxième aspect, l'invention propose également un moteur turbomachine, comprenant un support d'équipement comme décrit ci-dessus.

Selon un troisième aspect, l'invention comprend également un aéronef comprenant un tel moteur.

### BREVE DESCRIPTION DES DESSINS

D'autres caractéristiques, buts et avantages de la présente invention apparaîtront mieux à la lecture de la description détaillée qui va suivre, et au regard des dessins annexés donnés à titre d'exemples non limitatifs et sur lesquels :
La figure 1 est une vue en perspective d'un exemple de support d'équipement du type boîtier d'entrainement des accessoires à axes parallèles conforme à l'art antérieur, sur laquelle ont été omis les accessoires,
La figure 2 est une vue schématique en perspective d'un exemple de support d'équipement du type boîtier d'entrainement des accessoires à axes non parallèles conforme à l'art antérieur,

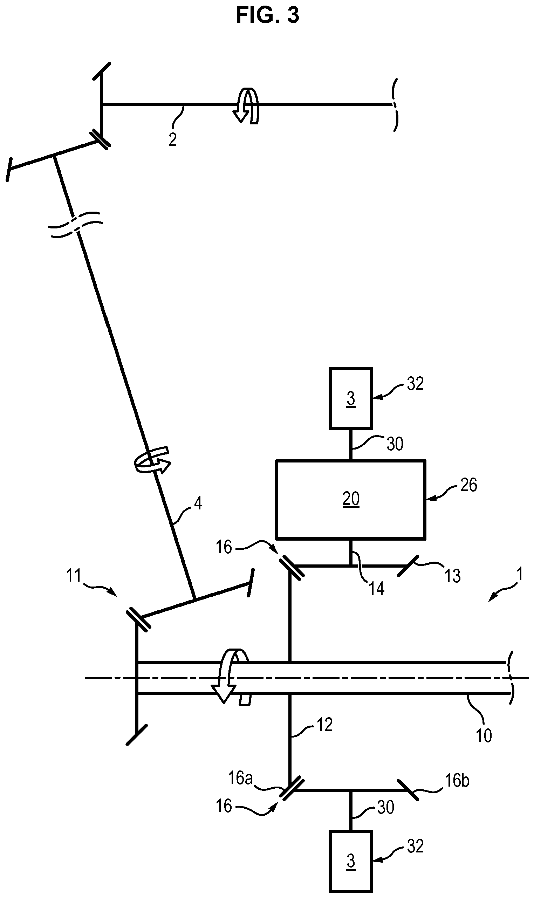

La figure 3 est une vue schématique partielle d'un exemple d'architecture d'un support d'équipement conforme à l'invention,
La figure 4a est une vue en coupe axiale d'un exemple de réalisation d'un réducteur à engrenages magnétiques,
La figure 4b est une vue de face du réducteur à engrenages magnétiques de la figure 4a, et

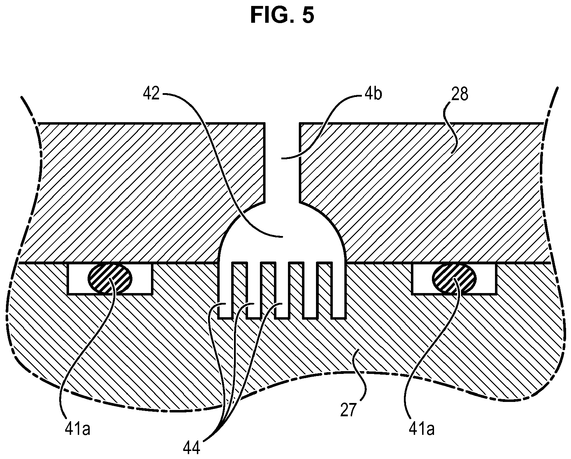

La figure 5 est une vue en coupe partielle d'un carter de réducteur à engrenages magnétiques, sur laquelle est visible l'espace de refroidissement.

### DESCRIPTION DETAILLEE D'UN MODE DE REALISATION

L'invention va être décrite tout particulièrement en référence à un aéronef comprenant un turboréacteur et un boîtier d'entraînement des accessoires 1 adapté pour entrainer mécaniquement des équipements auxiliaires, ou accessoires 3, nécessaires au fonctionnement du moteur ou à celui d'un aéronef. Ceci n'est cependant pas limitatif, dans la mesure où l'invention s'applique également à tout autre type de support d'équipement, tel que notamment un boîtier d'entrainement du type PGB, que le boîtier d'entraînement des accessoires 1 pourrait être utilisé dans toute autre turbomachine devant supporter et entraîner des accessoires 3, et que le nombre d'accessoires 3 décrits dans ce qui suit peut être différent selon les besoins de la turbomachine.

Un turboréacteur comporte typiquement une nacelle qui forme une ouverture pour l'admission d'un flux déterminé d'air vers le moteur proprement dit. Généralement, le turboréacteur comprend une ou plusieurs sections de compression de l'air admis dans le moteur. L'air ainsi comprimé est admis dans une chambre de combustion et mélangé avec du carburant avant d'y être brûlé. Les gaz d'échappement chauds issus de cette combustion sont ensuite détendus dans différents étages de turbine. La turbine fournit alors la puissance de rotation à la soufflante.

Le boîtier d'entraînement des accessoires 1, ou AGB 1, peut être fixé sur un carter du moteur, par exemple au niveau sous la soufflante ou dans le compartiment central, et entraine mécaniquement une série d'accessoires 3 en prélevant la puissance d'entrainement nécessaire sur un arbre moteur 2, généralement l'arbre du compresseur.

A cet effet, l'arbre moteur 2 est logé dans le carter de moteur et définit un axe de rotation. Par ailleurs, les accessoires 3 comprennent chacun un arbre de sortie 30 destiné à entrainer mécaniquement l'accessoire 3 correspondant.

L'AGB 1 quant à lui est relié à l'arbre moteur 2 par l'intermédiaire d'un arbre radial de transmission 4, qui est lui-même entraîné par l'arbre moteur 2.

L'AGB 1 comprend en outre une roue d'entrée 12 qui est entrainée en rotation par l'arbre moteur 2 à une vitesse principale et qui est connectée à l'arbre de sortie 30 de l'accessoire 3 afin de l'entrainer en rotation suivant une vitesse de sortie déterminée. La vitesse de sortie est notamment déterminée par le type d'accessoire 3 auquel est connecté l'arbre de sortie 30. La détermination des vitesses de sortie en fonction des accessoires 3 étant conventionnelle, elle ne sera pas davantage décrite ici.

L'AGB 1 comprend en outre un arbre d'entrée 14, entrainé en rotation par la roue d'entrée 12 suivant une vitesse d'entrée déterminée, et un réducteur à engrenages magnétiques 20, interposé entre l'arbre d'entrée 14 et l'arbre de sortie 30, de sorte que la vitesse d'entrée est différente de la vitesse de sortie.

Le réducteur à engrenages magnétiques 20, ou réducteur magnétique 20, permet ainsi de modifier la vitesse d'entrainement de l'arbre de sortie 30 de façon simple, peu coûteuse et fiable pour un encombrement axial (suivant l'axe de sortie de l'accessoire 3) réduit et un poids limité.

Dans ce qui suit, l'invention sera plus particulièrement décrite dans le cas d'un AGB 1 du type à engrenages à axes non parallèles. Ceci n'est cependant pas limitatif, l'invention s'appliquant également sans modification substantielle à un AGB 1 comprenant des engrenages à axes parallèles (comme illustré en figures 1), dans la mesure où il suffit d'interposer le réducteur magnétique 20 entre l'arbre de sortie 30 de l'accessoire 3 et la roue d'entrée 12 de l'AGB 1.

Un AGB 1 à engrenages à axes non parallèles comprend :
- un arbre primaire 10, entrainé par l'intermédiaire d'un renvoi d'angle primaire 11 par l'arbre radial de transmission 4,
- une série d'ensembles d'entrainement mécanique des arbres de sortie 30 des accessoires 3, comprenant chacun un renvoi d'angle 16 permettant ainsi de répartir les accessoires 3 sur un plus grand secteur angulaire de la périphérie du turboréacteur 8, en tenant compte de ses dimensions et de sa géométrie. Chaque renvoi d'angle 16 peut comprendre une couronne d'attaque 16a, entrainée par l'arbre primaire 10 de l'AGB 1, et un pignon de sortie 16b, engrené avec le pignon d'attaque et adapté pour entrainer l'arbre de sortie 30 auquel il est connecté. La couronne d'attaque 16a et le pignon de sortie 16b peuvent être à axes concourants (du type pignons coniques) ou à axes non concourants (du type vis sans fin)

On pourra notamment se référer au document FR 1355241 cité précédemment pour plus d'informations sur ce type d'AGB 1.

L'arbre primaire 10 et les ensembles d'entrainement mécanique des accessoires 3 sont logés dans un carter 18 d'AGB.

Ici, la roue d'entrée 12 est donc fixée sur l'arbre primaire 10 de l'AGB 1 et entrainée en rotation par l'arbre moteur 2 par l'intermédiaire du renvoi d'angle primaire 11 et de l'arbre radial de transmission 4. La vitesse de rotation de la roue d'entrée 12 est donc imposée par la vitesse de rotation de l'arbre moteur 2, le rapport de réduction entre l'arbre moteur 2 et l'arbre radial de transmission 4 et le rapport de réduction entre l'arbre radial de transmission 4 et l'arbre primaire 10 de l'AGB 1.

La roue d'entrée 12 entraine en rotation un pignon d'entrée 13 associé, fixé solidairement à l'arbre d'entrée 14 afin de l'entrainer en rotation. Afin de permettre l'engrènement du pignon d'entrée 13 et de la roue d'entrée 12, le pignon d'entrée 13 est choisi de manière à présenter des dents du même type et du même module que la roue d'entrée 12. Par exemple, la roue d'entrée 12 peut être du type spiro-conique. Le pignon d'entrée 13 est alors également du type spiro-conique et de même module. Le rapport de réduction entre le pignon d'entrée 13 et la roue d'entrée 12 détermine la vitesse de rotation de l'arbre d'entrée 14.

De préférence, la roue d'entrée 12 peut entrainer un deuxième pignon 16b, de même module et du même type que la roue d'entrée 12. Le deuxième pignon 16b est alors fixé sur l'arbre de sortie 30 d'un accessoire 3 afin de l'entrainer en rotation. De manière conventionnelle, la vitesse de rotation du deuxième pignon 16b dépend du rapport d'engrenage entre le deuxième pignon 16b et la roue d'entrée 12 : ici, la vitesse est sensiblement égale à la vitesse de rotation de l'arbre d'entrée 14.

Le réducteur magnétique 20 comprend :
- un rotor interne 22, fixé sur l'arbre d'entrée 14, par exemple à l'aide d'une liaison crénelée, et comprenant un premier nombre de pôles magnétiques,
- un rotor externe 23, fixé sur l'arbre de sortie 30 et comprenant un deuxième nombre de pôles magnétiques, et
- un stator 26, fixe par rapport au carter 18 de l'AGB 1, ledit stator 26 étant logé entre le rotor interne 22 et le rotor externe 23 et comprenant un troisième nombre de pôles magnétiques.

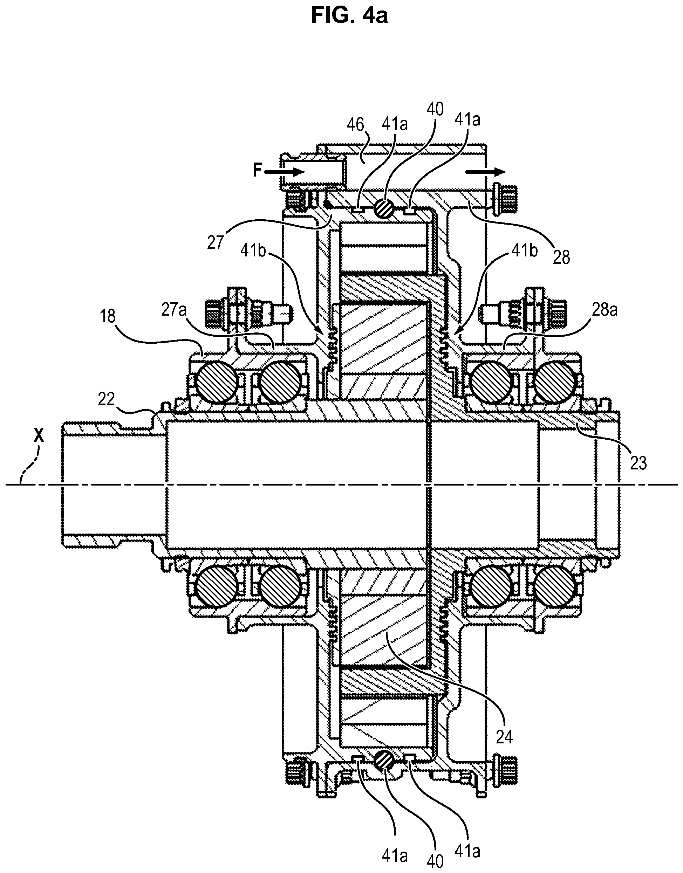

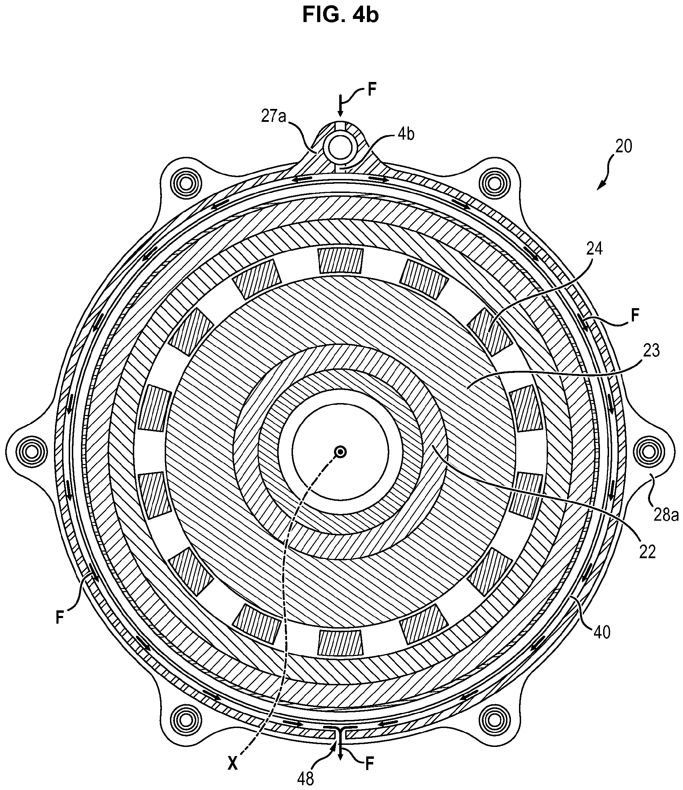

Le rotor interne 22 et le rotor externe 23 sont coaxiaux avec l'arbre d'entrée 14 et l'arbre de sortie 30, et définissent ainsi un axe X, visible sur les figures 4a et 4b. De manière connue en soit, le nombre de pôles magnétiques du rotor interne 22 et du rotor externe 23 détermine le rapport de réduction du réducteur magnétique 20. Par ailleurs, le type de pôles magnétiques (matériau constitutif) et la géométrie des pôles magnétiques permettent d'ajuster le couplage entre le rotor interne 22 et le rotor externe 23, et donc le couplage entre l'arbre d'entrée 14 et l'arbre de sortie 30.

Dans un exemple de réalisation, le rotor interne 22 comprend moins de pôles magnétiques que le rotor externe 23 afin d'obtenir un rapport de réduction supérieur à 1. Par ailleurs, les pôles magnétiques du rotor interne 22 et du stator 26 peuvent comprendre des aimants en samarium-cobalt tandis que les pôles magnétiques du rotor externe 23 peuvent comprendre des barres ferromagnétiques.

On notera que la mise en oeuvre d'un réducteur magnétique 20 permet, le cas échéant, d'éviter l'ajout de moyens fusibles dans le cas où la vitesse de rotation trop est élevée pour l'accessoire 3. En effet, le choix des différents pôles magnétiques permet de définir une vitesse de couplage maximale à partir de laquelle l'arbre de sortie 30 décroche. En effet, lorsque le couplage devient trop important entre l'arbre d'entrée 14 et l'arbre de sortie 30, l'interaction électromagnétique entre les pôles magnétiques du rotor interne 22 et les pôles magnétiques du rotor externe 23 n'est plus suffisante pour entrainer l'arbre de sortie 30 en rotation : il se produit alors un découplage, qui joue le rôle d'un fusible permettant d'isoler mécaniquement l'arbre d'entrée 14 et l'arbre de sortie 30.

La mise en oeuvre d'un réducteur magnétique 20 permet en outre d'assurer une transmission du couple sans contact, et donc sans usure des différents organes d'engrènement 22, 23.

Le réducteur magnétique 20 est logé dans un carter 26, configuré pour isoler le réducteur magnétique 20 de son environnement. En particulier, le carter 26 permet d'éviter l'introduction d'huile issue des organes d'engrènement de l'AGB 1 (afin de lubrifier les différents organes), qui serait susceptible d'endommager le réducteur magnétique 20 et d'altérer ses performances en introduisant un cisaillement en raison de la présence de fluide entre les rotors 22, 23. On notera en effet que, en fonctionnement, le carter 18 de l'AGB renferme de manière relativement continue un brouillard d'huile résultant du mouvement des différents organes d'engrènement qui le composent.

Les accessoires 3 peuvent également être logés dans des carters 32 d'accessoires.

Le carter 28 du réducteur magnétique 20 et les carters 32 d'accessoires sont fixes par rapport au carter 18 de l'AGB.

Le réducteur magnétique 20 étant susceptible de monter en température lors des différentes phases de vol du moteur, il peut comprendre un système de refroidissement. Le système de refroidissement doit cependant être capable de refroidir efficacement les pièces actives du réducteur magnétique 20, à savoir le rotor interne 22, le rotor externe 23 et le stator 24, sans pour autant les noyer dans le fluide de refroidissement F.

Le carter 26 du réducteur magnétique 20 peut par exemple comprendre un carter de révolution interne 27 et un carter de révolution externe 28 coaxiaux avec l'arbre d'entrée 14 et l'arbre de sortie 30, le carter interne 27 s'étendant à l'intérieur du carter externe 28. Un jeu peut alors être ménagé entre le carter interne 27 et le carter externe 28, afin de définir un espace de refroidissement 40 confiné dans lequel peut circuler un fluide de refroidissement F. En variante, l'espace de refroidissement 40 peut être formé par usinage des faces en regard du carter interne 27 et du carter externe 28.

Dans l'exemple de réalisation illustré sur les figures, le carter interne 27 est fixé au carter de l'AGB 1 par l'intermédiaire d'une bride interne 27a, tandis que le carter externe 28 est fixé au carter de l'accessoire 3 par l'intermédiaire d'une bride externe 28a. En variante, le carter interne 27 pourrait être fixé au carter 30 de l'accessoire par l'intermédiaire de la bride externe 28a, tandis que le carter interne 27 est fixé au carter de l'AGB 1 par l'intermédiaire de la bride interne 27a. Le carter interne 27 et le carter externe 28 sont donc fixes par rapport au carter de l'AGB 1 et au carter de l'accessoire 3.

L'espace de refroidissement 40 peut notamment présenter la forme d'une gorge 42 annulaire usinées dans des parois en regard du carter interne 27 et du carter externe 28, dont la section peut être définie en fonction du fluide de refroidissement F choisi et des échanges convectifs nécessaires pour refroidir suffisamment le réducteur magnétique 20. Le réducteur magnétique 20 peut alors comprendre, de part et d'autre de l'espace de refroidissement 40 (suivant la direction axiale du réducteur magnétique 20), un joint d'étanchéité statique 41a du type joint torique permettant d'assurer l'étanchéité de l'espace de refroidissement 40 et éviter le passage du fluide de refroidissement F vers le rotor interne 22, le rotor externe 23 ou le stator 24.

De manière optionnelle également, le réducteur magnétique 20 peut comprendre, en plus ou à la place des joints d'étanchéité statiques 41a, des joints d'étanchéité dynamiques 41 b du type joint à labyrinthes, disposés entre le carter de réducteur 26 et le rotor interne 22 d'une part et le rotor externe 23 d'autre part. Dans l'exemple illustré sur les figures, un premier joint à labyrinthes 41b est formé entre une paroi radiale du carter interne 27 et le rotor interne 22, au niveau de la bride interne 27a, et un deuxième joint à labyrinthes 41b est formé entre une paroi radiale du carter externe 28 et le rotor externe 23, au niveau de la bride externe 28a. En variante, les joints d'étanchéité dynamiques 41b peuvent comprendre des joints à air (injection d'air au milieu des labyrinthes pour étanchéifier l'espace).

Par exemple, l'espace de refroidissement 40 peut présenter une forme annulaire coaxiale avec l'arbre de sortie 30 et l'arbre d'entrée 14 avec une section sensiblement circulaire ou parallélépipédique, et comprendre une série de rainures 44 annulaires, formées dans le carter interne 27 et s'étendant radialement depuis la gorge 42 annulaire. Les rainures 44 permettent ainsi de maximiser les échanges convectifs avec le carter interne 27, pour un encombrement radial et axial réduit.

L'espace de refroidissement 40 peut notamment être alimenté en fluide de refroidissement F depuis un réservoir séparé. L'espace de refroidissement 40 peut par ailleurs être en communication fluidique avec la zone interne du carter de l'AGB 1 : le fluide de refroidissement F comprend alors l'huile destinée à circuler dans le carter 18 de l'AGB 1 sous forme de brouillard afin de lubrifier les organes d'engrènement. Par exemple, une conduite 46 peut être formée entre la source d'huile de lubrification et le carter 26 du réducteur magnétique 20, afin d'amener l'huile dans l'espace de refroidissement 40. L'huile circule alors dans l'espace annulaire 40 de refroidissement, où elle refroidit par convection forcée le réducteur magnétique 20, puis ressort de l'espace de refroidissement 40 à une température plus élevée par une sortie 48 et entre, à l'aide d'une conduite dédiée 48, dans le carter d'AGB 1.

Ainsi, sur l'exemple illustré en figure 4b, le fluide de refroidissement F entre dans l'espace de refroidissement 40 annulaire par la conduite 46, parcourt le carter de l'AGB 1 et refroidit le réducteur magnétique 20, puis ressort à l'extrémité opposée de celui-ci par la conduite 48. Le fluide de refroidissement F peut alors être envoyé dans le carter 18 de l'AGB.

## Revendications

1. Support d'équipement (1) pour un moteur, le moteur comprenant un arbre moteur (2),
ledit support d'équipement (1) étant soit un boîtier d'entrainement des accessoires pour un turboréacteur soit un turbopropulseur ou un boîtier d'entrainement d'un turbopropulseur et comportant :
- au moins un accessoire (3) comprenant un arbre de sortie (30),
- une roue d'entrée (12), ladite roue d'entrée (12) étant d'une part entrainée en rotation par l'arbre moteur (2) du moteur à une vitesse principale et d'autre part connectée à l'arbre de sortie (30) de l'accessoire afin de l'entrainer en rotation suivant une vitesse de sortie déterminée,
- un arbre d'entrée (14), entrainé en rotation par la roue d'entrée (12) suivant une vitesse d'entrée déterminée, et
- un carter (18) de support d'équipement,
le support d'équipement (1) étant **caractérisé en ce qu'**il comprend en outre un réducteur à engrenages magnétiques (20), interposé entre l'arbre d'entrée (14) et l'arbre de sortie (30), de sorte que la vitesse d'entrée est différente de la vitesse de sortie, le réducteur à engrenages magnétiques (20) comprenant :
- un rotor interne (22), fixé sur l'arbre d'entrée (14),
- un rotor externe (23), fixé sur l'arbre de sortie (30), et
- un stator (24), fixe par rapport au carter (18) du support d'équipement et logé entre le rotor interne (22) et le rotor externe (23),
le rotor interne (22), le rotor externe (23) et le stator (24) étant coaxiaux avec l'arbre d'entrée (14) et l'arbre de sortie (30).

2. Support d'équipement (1) selon la revendication 1, dans lequel la roue d'entrée (12) comprend un pignon spiro-conique.

3. Support d'équipement (1) selon l'une des revendications 1 ou 2, comprenant en outre un deuxième accessoire (3) comprenant un arbre de sortie (30) entrainé en rotation par la roue d'entrée (12) suivant une vitesse égale à la vitesse d'entrée.

4. Support d'équipement (1) selon l'une des revendications 1 à 3, dans lequel le réducteur à engrenages magnétiques (20) comprenant en outre un système de refroidissement (40).

5. Support d'équipement (1) selon la revendication 4, comprenant en outre un carter de réducteur (26), fixe par rapport au carter (18) du support d'équipement, et dans lequel :
- le carter de réducteur (26) comprend un carter de révolution interne (27) et un carter de révolution externe (28) coaxiaux avec l'arbre d'entrée (14) et l'arbre de sortie (30), ledit carter interne (27) s'étendant à l'intérieur du carter externe (28), et
- le système de refroidissement comprend un espace de refroidissement (40) destiné à recevoir un fluide de refroidissement (F), ledit espace de refroidissement (40) étant ménagé entre le carter interne (27) et le carter externe (28).

6. Support d'équipement (1) selon la revendication 5, dans lequel l'accessoire (3) est logé dans un carter d'accessoire (30) fixe par rapport au carter (18) du support d'équipement, l'un parmi le carter interne (27) et le carter externe (28) étant fixé au carter (18) du support d'équipement par l'intermédiaire d'une bride interne (27a) tandis que l'autre parmi le carter externe (28) et le carter interne (27) est fixé à un carter d'accessoire (30) par l'intermédiaire d'une bride externe (28a).

7. Support d'équipement (1) selon l'une des revendications 5 ou 6, prise en combinaison avec la revendication 4, comprenant en outre des joints d'étanchéité dynamique (41b) sensiblement annulaires positionnés entre le rotor interne (22) et le carter de réducteur (26) d'une part et entre le rotor externe (23) et le carter de réducteur (26) d'autre part.

8. Support d'équipement (1) selon l'une des revendications 5 à 7, comprenant en outre un joint d'étanchéité statique (41a) de forme sensiblement annulaire de part et d'autre de l'espace de refroidissement (40) entre le carter interne (27) et le carter externe (28) configuré pour garantir une étanchéité dudit espace de refroidissement (40).

9. Support d'équipement (1) selon l'une des revendications 5 à 8, dans lequel l'espace de refroidissement (40) comprend au moins une gorge annulaire (42), sensiblement coaxiale avec le carter interne (27) et le carter externe (28), et une série de rainures annulaires (44), formées dans le carter interne (27) et s'étendant radialement depuis la gorge annulaire (42).

## Patentansprüche

1. Ausrüstungshalterung (1) für einen Motor, wobei der Motor eine Antriebswelle (2) umfasst,
wobei die Ausrüstungshalterung (1) entweder ein Antriebsgehäuse der Hilfsgeräte für ein Turbinenstrahltriebwerk oder ein Propellerturbinen-Luftstrahltriebwerk oder ein Antriebsgehäuse eines Propellerturbinen-Luftstrahltriebwerks ist und Folgendes umfasst:
- mindestens ein Hilfsgerät (3), das eine Abtriebswelle (30) umfasst,
- ein Eingangsrad (12), wobei das Eingangsrad (12) einerseits durch die Antriebswelle (2) des Motors bei einer Hauptdrehzahl drehbar angetrieben wird und andererseits mit der Abtriebswelle (30) des Hilfsgeräts verbunden ist, um es gemäß einer bestimmten Ausgangsdrehzahl drehbar anzutreiben,
- eine Eingangswelle (14), die durch das Eingangsrad (12) gemäß einer bestimmten Eingangsdrehzahl drehbar angetrieben wird, und
- einen Ausrüstungshalterungskasten (18),
wobei die Ausrüstungshalterung (1) **dadurch gekennzeichnet ist, dass** sie ferner ein Magnetgetriebe (20) umfasst, das zwischen der Eingangswelle (14) und der Ausgangswelle (30) zwischengelegt ist, derart dass die Eingangsdrehzahl sich von der Ausgangsdrehzahl unterscheidet, wobei das Magnetgetriebe (20) Folgendes umfasst:
- einen Innenrotor (22), der auf der Eingangswelle (14) befestigt ist,
- einen Außenrotor (23), der auf der Ausgangswelle (30) befestigt ist, und
- einen Stator (24), der in Bezug zu dem Kasten (18) der Ausrüstungshalterung fest ist und zwischen dem Innenrotor (22) und dem Außenrotor (23) untergebracht ist,
wobei der Innenrotor (22), der Außenrotor (23) und der Stator (24) koaxial mit der Eingangswelle (14) und der Ausgangswelle (30) sind.

2. Ausrüstungshalterung (1) nach Anspruch 1, wobei das Eingangsrad (12) einen Kegelradtrieb umfasst.

3. Ausrüstungshalterung (1) nach einem der Ansprüche 1 oder 2, die ferner ein zweites Hilfsgerät (3) umfasst, das eine Ausgangswelle (30) umfasst, die durch das Eingangsrad (12) gemäß einer Drehzahl drehbar angetrieben wird, die gleich der Eingangsdrehzahl ist.

4. Ausrüstungshalterung (1) nach einem der Ansprüche 1 bis 3, wobei das Magnetgetriebe (20) ferner ein Kühlsystem (40) umfasst.

5. Ausrüstungshalterung (1) nach Anspruch 4, das ferner einen Getriebekasten (26) umfasst, der in Bezug zum Kasten (18) der Ausrüstungshalterung fest ist, und wobei:
- der Getriebekasten (26) einen Innenumlaufkasten (27) und einen Außenumlaufkasten (28) umfasst, die koaxial mit der Eingangswelle (14) und der Ausgangswelle (30) sind, wobei der Innenkasten (27) sich im Inneren des Außenkastens (28) erstreckt, und
- das Kühlsystem einen Kühlraum (40) umfasst, der dazu bestimmt ist, ein Kühlmittel (F) aufzunehmen, wobei der Kühlraum (40) zwischen dem Innenkasten (27) und dem Außenkasten (28) eingerichtet ist.

6. Ausrüstungshalterung (1) nach Anspruch 5, wobei das Hilfsgerät (3) in einem Hilfsgerätekasten (30) untergebracht ist, der in Bezug zu dem Kasten (18) der Ausrüstungshalterung fest ist, wobei einer von dem Innenkasten (27) und dem Außenkasten (28) über einen Innenflansch (27a) an dem Kasten (18) der Ausrüstungshalterung befestigt ist, während der andere von dem Außenkasten (28) und dem Innenkasten (27) über einen Außenflansch (28a) an dem Hilfsgerätekasten (30) befestigt ist.

7. Ausrüstungshalterung (1) nach einem der Ansprüche 5 oder 6 in Kombination mit Anspruch 4, die ferner im Wesentlichen ringförmige dynamische Dichtungen (41b) umfasst, die zwischen dem Innenrotor (22) und dem Getriebekasten (26) einerseits und zwischen dem Außenrotor (23) und dem Getriebekasten (26) andererseits positioniert sind.

8. Ausrüstungshalterung (1) nach einem der Ansprüche 5 bis 7, die ferner eine im Wesentlichen ringförmige statische Dichtung (41a) auf beiden Seiten des Kühlraums (40) zwischen dem Innenkasten (27) und dem Außenkasten (28) umfasst, die ausgestaltet ist, um eine Dichtheit des Kühlraums (40) zu gewährleisten.

9. Ausrüstungshalterung (1) nach einem der Ansprüche 5 bis 8, wobei der Kühlraum (40) mindestens eine ringförmige Nut (42), die im Wesentlichen koaxial mit dem Innenkasten (27) und dem Außenkasten (28) ist, und eine Reihe von ringförmigen Rillen (44) umfasst, die in dem Innenkasten (27) gebildet sind und sich von der ringförmigen Nut (42) aus radial erstrecken.

## Claims

1. Equipment drive (1) for an engine, the engine comprising a driveshaft (2),
said equipment drive (1) being either an accessory gearbox for a turbojet or a turboprop, or a propeller gearbox of a turboprop, and comprising:
- at least one accessory (3) comprising an output shaft (30),
- an input gear (12), said input gear (12) being, on the one hand, driven in rotation by the driveshaft (2) of the engine at a primary speed and on the other hand connected to the output shaft (30) of the accessory so as to drive it in rotation at a predetermined output speed,
- an input shaft (14), driven in rotation by the input gear (12) at a predetermined input speed, and
- an equipment drive casing (18),
the equipment drive (1) being **characterized in that** it further comprises a magnetically geared speed reducer (20), interleaved between the input shaft (14) and the output shaft (30), so that the input speed is different from the output speed, the magnetically geared speed reducer (20) comprising:
- an internal rotor (22), attached to the input shaft (14),
- an external rotor (23), attached to the output shaft (30), and
- a stator (24), fixed with respect to the casing (18) of the equipment drive and accommodated between the internal rotor (22) and the external rotor (23), the internal rotor (22), the external rotor (23) and the stator (24) being coaxial with the input shaft (14) and the output shaft (30).

2. The equipment drive (1) according to claim 1, wherein the input gear (12) comprises a spiral bevel gear.

3. The equipment drive (1) according to one of claims 1 or 2, further comprising a second accessory (3) comprising an output shaft (30) driven in rotation by the input gear (12) at a speed equal to the input speed.

4. The equipment drive (1) according to one of claims 1 to 3, wherein the magnetically geared speed reducer (20) further comprises a cooling system (40).

5. The equipment drive (1) according to claim 4, further comprising a reducer casing (26), fixed with respect to the casing (18) of the equipment drive, and wherein:
- the reducer casing (26) comprises an axially symmetrical internal casing (27) and an axially symmetrical external casing (28) coaxial with the input shaft (14) and the output shaft (30), said internal casing (27) extending inside the external casing (28), and
- the cooling system comprises a cooling volume (40) designed to receive a cooling fluid (F), said cooling volume (40) being provided between the internal casing (27) and the external casing (28).

6. The equipment drive (1) according to claim 5, wherein the accessory (3) is accommodated in an accessory casing (30) fixed with respect to the casing (18) of the equipment drive, one of the internal casing (27) and the external casing (28) being attached to the casing (18) of the equipment drive by means of an internal flange (27a) while the other of the external casing (28) and the internal casing (27) is attached to an accessory casing (30) by means of an external flange (28a) .

7. The equipment drive (1) according to one of claims 5 or 6, taken in combination with claim 4, further comprising substantially annular dynamic seals (41b) positioned between the internal rotor (22) and the reducer casing (26) on the one hand and between the external rotor (23) and the reducer casing (26) on the other hand.

8. The equipment drive (1) according to one of claims 5 to 7, further comprising a static seal (41a) with a substantially annular shape on either side of the cooling volume (40) between the internal casing (27) and the external casing (28) configured to guarantee a seal of said cooling volume (40).

9. The equipment drive (1) according to one of claims 5 to 8, wherein the cooling volume (40) comprises at least one annular throat (42), substantially coaxial with the internal casing (27) and the external casing (28), and a series of annular grooves (44), formed in the internal casing (27) and extending radially from the annular throat (42).
